# FASCICULE DE BREVET EUROPEEN

(11) **EP 4 313 764 B1**
(45) Date de publication et mention de la délivrance du brevet: **23.04.2025**
(21) Numéro de dépôt: 22717218.6
(22) Date de dépôt: 22.03.2022
(51) Int. Cl.: F41H 13/00, B64D 7/00, B64U 10/25

(54) **AERONEF DE COMBAT A SYSTEME D'ARMEMENT ELECTRIQUE A GESTION D'ENERGIE OPTIMISEE**
KAMPFFLUGZEUG MIT ELEKTRISCHEM WAFFENSYSTEM MIT OPTIMIERTEM ENERGIEMANAGEMENT
COMBAT AIRCRAFT WITH AN ELECTRICAL WEAPON SYSTEM WITH OPTIMISED ENERGY MANAGEMENT

(30) Priorité: 26.03.2021 FR 2102946
(43) Date de publication de la demande: 07.02.2024
(73) Titulaire: Safran Helicopter Engines, 64510 Bordes (FR)
(72) Inventeur: VINCENZOTTO, Quentin, 77550 MOISSY-CRAMAYEL (FR); MERCIER-CALVAIRAC, Fabien, 77550 MOISSY-CRAMAYEL (FR); JARIN, Jean-Baptiste, 77550 MOISSY-CRAMAYEL (FR)
(74) Mandataire: Brevalex
(86) Numéro de dépôt international: PCT/FR2022/050529
(87) Numéro de publication internationale: WO 2022/200732

(56) Documents cités:
- EP-A1- 3 663 197
- US-B2- 9 771 157

## Description

### Domaine technique

La présente invention se rapporte au domaine des aéronefs de combat à système d'armement électrique.

### État de la technique antérieure

Des aéronefs à propulsion hybride, notamment des drones ou aéronefs non-habités (UAV), sont connus. Les sources d'énergie électrique de tels aéronefs (turbogénérateurs, batteries) doivent être capables de délivrer la puissance nécessaire pour mouvoir l'aéronef mais également pour alimenter en énergie électrique les systèmes non-propulsifs embarqués, à savoir les systèmes de commande de vol (gouvernes, calculateurs, etc.) mais aussi, le cas échéant, des systèmes d'armement électriques, tels que des systèmes d'armement électroniques et des armes à énergie dirigée.

La part de l'énergie nécessaire pour la propulsion tend à diminuer considérablement au regard de celle nécessaire pour les systèmes d'armement électriques, avec le développement de tels systèmes.

Une telle évolution conduit à surdimensionner les sources d'énergie électrique, ce qui est pénalisant pour la masse globale des aéronefs et limite par conséquent la masse des systèmes d'armes pouvant être embarqués sur de tels aéronefs.

Selon son résumé, EP3663197 A1 divulgue un système exemplaire de propulsion hybride à grande vitesse pour un aéronef à rotors basculants comprenant deux nacelles pivotantes, chaque nacelle comprenant un moteur électrique couplé à un propulseur; un système aérien électrique; un générateur électrique; un bus électrique connecté électriquement au générateur électrique, aux moteurs électriques et au système aérien électrique; et un moteur turbofan convertible couplé à un générateur électrique par l'intermédiaire d'un arbre d'entraînement.

Selon son résumé, US9771157 B2 divulgue un système aéroporté unique de gestion de l'énergie électrique et de la chaleur.

Dans ce contexte, il existe un besoin pour un aéronef et un procédé de mise en œuvre de celui-ci, permettant d'accroître la puissance électrique disponible pour le système d'armement électrique de celui-ci, tout en limitant le niveau maximal de puissance que la source d'énergie électrique doit être capable de fournir et en évitant ainsi de surdimensionner cette dernière.

### Exposé de l'invention

L'invention propose à cet effet un aéronef de combat à voilure fixe, comprenant :
- une source d'énergie électrique,
- un système propulsif,
- un ensemble non-propulsif de faible puissance, comprenant un système de commande de vol,
- un ensemble non-propulsif de forte puissance, comprenant un système d'arme électrique, et
- une unité de gestion.

Selon l'invention, l'unité de gestion est configurée pour établir sélectivement sur commande plusieurs modes de fonctionnement comprenant :
- un mode de vol, dans lequel l'unité de gestion distribue la puissance électrique fournie par la source d'énergie électrique en fonction des besoins au système propulsif et à l'ensemble non-propulsif de faible puissance, et

- un mode d'attaque, dans lequel l'unité de gestion limite la puissance électrique fournie par la source d'énergie électrique au système propulsif et à l'ensemble non-propulsif de faible puissance, à la puissance requise pour permettre à l'aéronef de planer, et réserve pour l'ensemble non-propulsif de forte puissance une majorité de l'énergie électrique disponible.

L'unité de gestion ainsi configurée permet de tirer parti de la capacité à planer de l'aéronef, du fait de sa voilure fixe, pour réduire les besoins en énergie du système propulsif et de l'ensemble non-propulsif de faible puissance pendant les phases d'utilisation du système d'arme électrique, de manière à réserver un maximum d'énergie électrique disponible à ce dernier.

L'invention permet ainsi d'optimiser l'utilisation de l'énergie électrique disponible à bord de l'aéronef tout au long du vol de ce dernier, en fonction de l'utilisation ou non du système d'arme électrique.

Suivant d'autres aspects avantageux de l'invention, le dispositif de liaison présente une ou plusieurs des caractéristiques suivantes, prise(s) isolément ou suivant toutes les combinaisons techniquement possibles :
- la source d'énergie électrique comprend un turbogénérateur et une unité de stockage électrique ;
- le mode d'attaque comprend un mode d'attente dans lequel le système d'arme électrique est à l'arrêt, et un mode de feu dans lequel le système d'arme électrique est en fonctionnement ;
- l'unité de gestion est configurée pour mettre le turbogénérateur dans un régime de pseudo-ralenti et distribuer l'intégralité de la puissance électrique générée par le turbogénérateur à l'ensemble non-propulsif de faible puissance, dans le mode d'attente ;

- l'unité de gestion est configurée pour mettre le turbogénérateur dans un régime de pseudo-ralenti dans lequel une partie de la puissance électrique générée par le turbogénérateur est délivrée à l'ensemble non-propulsif de faible puissance tandis que le reste de la puissance électrique générée par le turbogénérateur est utilisé pour recharger l'unité de stockage électrique, dans le mode d'attente ;
   - l'unité de gestion est configurée pour mettre le turbogénérateur dans un régime de pleine puissance et distribuer au moins une majorité de la puissance électrique générée par le turbogénérateur au système d'arme électrique, dans le mode de feu ;
   - l'unité de gestion est configurée pour distribuer une puissance maximale délivrable par l'unité de stockage électrique au système d'arme électrique, dans le mode de feu ;
   - le système d'arme électrique comprend au moins l'un parmi un système d'armement électronique et une arme à énergie dirigée.

L'invention concerne également un procédé de mise en œuvre d'un aéronef du type décrit ci-dessus, comprenant successivement des étapes de :
- A) décollage, montée, et début de croisière, dans lesquelles l'unité de gestion est maintenue en mode de vol, puis
- B) attaque, après commutation de l'unité de gestion en mode d'attaque, puis
- C) fin de croisière et descente, après commutation de l'unité de gestion en mode de vol.

Dans des exemples de mise en œuvre du procédé, l'étape B) comprend la commutation de l'unité de gestion dans le mode d'attente, puis la commutation de l'unité de gestion dans le mode de feu.

### Brève description des dessins

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- La Figure 1 est une vue schématique de dessus d'un aéronef selon un mode de réalisation préféré de l'invention ;
- La Figure 2 est un diagramme illustrant la consommation de puissance du système propulsif et de l'ensemble d'un aéronef d'un type connu au cours d'une mission typique ;
- La Figure 3 est un diagramme illustrant la consommation globale de puissance de l'aéronef de la figure 1 au cours d'un exemple de mission ;
- La Figure 4 est un diagramme illustrant la consommation globale de puissance de l'aéronef de la figure 1 au cours d'un autre exemple de mission ;
- La Figure 5 est une vue semblable à la figure 1, illustrant un mode de fonctionnement de l'aéronef de la figure 1 ;
- La Figure 6 est une vue semblable à la figure 5, illustrant un autre mode de fonctionnement de l'aéronef de la figure 1.

Dans l'ensemble de ces figures, des références identiques peuvent désigner des éléments identiques ou analogues.

### Exposé détaillé de modes de réalisation préférés

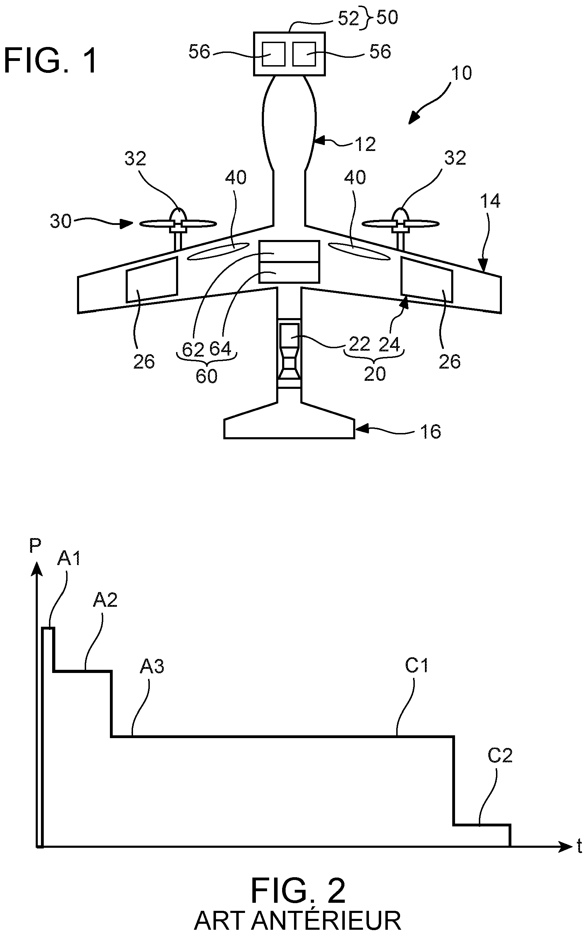

La figure 1 illustre schématiquement un aéronef 10 de combat à voilure fixe selon un mode de réalisation préféré de l'invention, par exemple un aéronef destiné au vol non-habité ou drone.

L'aéronef 10 comprend par exemple un fuselage 12, une voilure 14 fixe, et un empennage arrière 16.

L'aéronef 10 comporte une source d'énergie électrique 20. Dans le cas préférentiel où l'aéronef est à propulsion hybride, la source d'énergie électrique 20 comporte un (ou plusieurs) turbogénérateur(s) 22 et une unité de stockage électrique 24. Le turbogénérateur offre par exemple une puissance électrique maximale de 1 MW. À cet effet, le turbogénérateur comporte par exemple un cœur thermodynamique d'une puissance de 3000 shp (« shaft horsepower ») et une génératrice haute vitesse, dont le rotor peut atteindre des vitesses supérieures à 20000 rpm (tours par minute). L'unité de stockage électrique 24 comprend une (ou plusieurs) batterie(s) 26 et est par exemple conçue pour générer une haute tension, par exemple de 800 V (volts).

En variante, l'aéronef peut être à propulsion purement électrique, auquel cas la source d'énergie électrique peut être constituée uniquement d'une ou plusieurs batterie(s).

L'aéronef 10 comporte en outre un système propulsif 30, par exemple constitué de propulseurs à hélice 32 répartis sur la voilure fixe 14 de part et d'autre du fuselage 12. Dans l'exemple illustré, le système propulsif 30 est constitué de deux propulseurs à hélice 32 capables chacun d'absorber une puissance électrique de 500 kW et de la convertir en poussée.

L'aéronef 10 comporte en outre un ensemble non-propulsif dit de faible puissance 40, comprenant un système de commande de vol. Un tel système comprend les surfaces mobiles de l'aéronef ainsi que l'ensemble des moyens destinés à l'actionnement de ces dernières. L'ensemble non-propulsif de faible puissance 40 peut aussi comporter d'autres systèmes auxiliaires (par exemple pour le dégivrage).

L'aéronef 10 comporte également un ensemble non-propulsif dit de forte puissance 50, comprenant un système d'arme électrique 52. Un tel système comprend au moins l'un parmi un système d'armement électronique 54 et une arme à énergie dirigée 56.

Enfin, l'aéronef comprend une unité de gestion 60, qui est typiquement définie comme englobant un système 62 de surveillance et de distribution d'énergie électrique dans l'aéronef, et un système 64 de commande capable de piloter les différents composants de la source d'énergie électrique 20 (turbogénérateur 22, unité de stockage électrique 24) en fonction des besoins.

Selon l'invention, l'unité de gestion 60 est configurée pour établir sélectivement sur commande plusieurs modes de fonctionnement comprenant :
- un mode de vol, dans lequel l'unité de gestion 60 distribue la puissance électrique fournie par la source d'énergie électrique 20 en fonction des besoins au système propulsif 30 et à l'ensemble non-propulsif de faible puissance 40, et
- un mode d'attaque, dans lequel l'unité de gestion 60 limite la puissance électrique fournie par la source d'énergie électrique au système propulsif 30 et à l'ensemble non-propulsif de faible puissance 40 à la puissance requise pour permettre à l'aéronef 10 de planer, et réserve pour l'ensemble non-propulsif de forte puissance 50 une majorité de l'énergie électrique disponible.

L'unité de gestion 60 ainsi configurée permet de tirer parti de la capacité à planer de l'aéronef, du fait de sa voilure fixe 14, pour réduire les besoins en énergie du système propulsif et de l'ensemble non-propulsif de faible puissance pendant les phases d'utilisation du système d'arme électrique, de manière à réserver un maximum d'énergie électrique disponible à ce dernier.

L'invention permet ainsi d'optimiser l'utilisation de l'énergie électrique disponible à bord de l'aéronef tout au long du vol de ce dernier, en fonction de l'utilisation ou non du système d'arme électrique.

La commande de l'unité de gestion 60 pour le passage de l'un à l'autre des modes de fonctionnement est bien entendue assurée par un pilote opérant à bord de l'aéronef (dans le cas d'un aéronef habité) ou à distance (dans le cas d'un aéronef non habité) aux moyens de systèmes de communication pouvant être conventionnels. En variante, la commande de l'unité de gestion 60 pour le passage de l'un à l'autre des modes de fonctionnement peut être opérée de manière automatique suivant un plan de vol préétabli.

Plus précisément, le mode d'attaque comprend un mode d'attente dans lequel le système d'arme électrique 52 est à l'arrêt, et un mode de feu dans lequel le système d'arme électrique 52 est en fonctionnement. Ce dernier mode correspond donc aux phases de déclenchement ou tir du système d'arme électrique 52.

Dans le mode d'attente, l'unité de gestion 60 est avantageusement configurée pour mettre le turbogénérateur 22 dans un régime de pseudo-ralenti et utiliser l'intégralité de la puissance électrique générée par le turbogénérateur pour permettre le fonctionnement de l'ensemble non-propulsif de faible puissance 40, et si l'unité de stockage 24 n'est pas suffisamment chargée pour garantir la possibilité de déclencher ultérieurement le système d'arme électrique 52, permettre un chargement de cette dernière.

Dans le mode de feu, l'unité de gestion 60 est configurée pour mettre le turbogénérateur 22 dans un régime de pleine puissance et distribuer au moins une majorité de la puissance électrique générée par le turbogénérateur 22 au système d'arme électrique 52 pour permettre le déclenchement de ce dernier.

Un procédé de mise en œuvre d'un aéronef du type décrit ci-dessus comprend successivement des étapes de :
- A) décollage, montée, et début de croisière, dans lesquelles l'unité de gestion 60 est maintenue en mode de vol, puis
- B) attaque, après commutation de l'unité de gestion 60 en mode d'attaque, puis
- C) fin de croisière, et descente, après commutation de l'unité de gestion en mode de vol 60.

À la différence d'une stratégie de gestion d'énergie conventionnelle ne tenant pas compte des besoins spécifiques des systèmes d'armes électriques, illustrée par le diagramme de la figure 2 et comprenant simplement une phase de décollage A1, une phase de montée A2, une phase de croisière A3/C1, puis une phase de descente C2 et d'atterrissage, le procédé selon l'invention repose sur une stratégie de gestion d'énergie tenant pas compte des besoins spécifiques des systèmes d'armes électriques.

L'étape B spécifique à l'invention comprend une ou plusieurs phases B1 de fonctionnement en mode d'attente, et éventuellement une ou plusieurs phases de déclenchement du système d'arme électrique 52 correspondant au mode de feu B2.

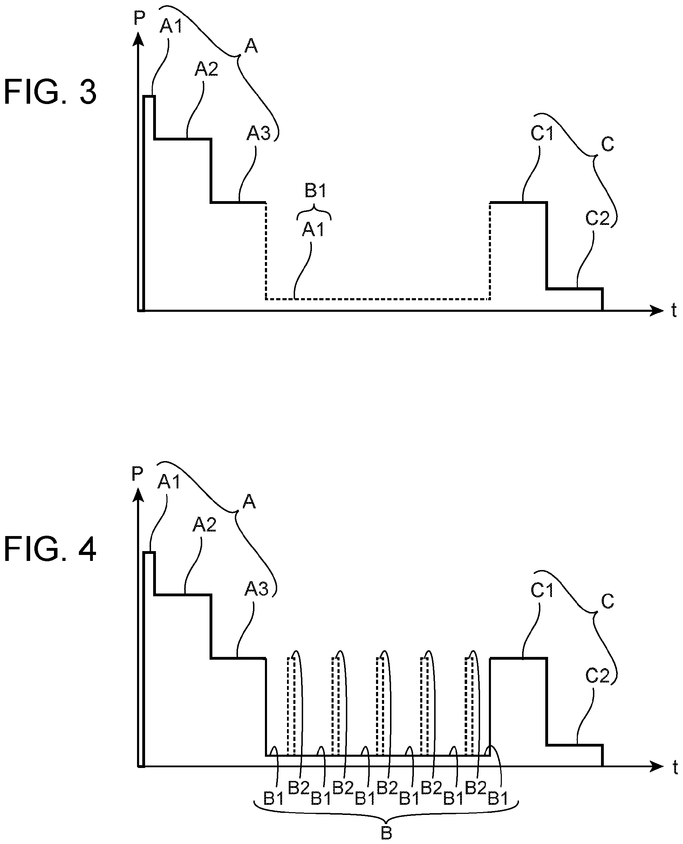

Ainsi, la figure 3 est un diagramme semblable à celui de la figure 2, illustrant l'enchaînement des étapes du procédé selon l'invention au cours d'un exemple de mission, comprenant une phase B1 de fonctionnement en mode d'attente sans utilisation effective du système d'arme électrique 52, tandis que la figure 4 est un diagramme semblable dans le cas où l'étape B comprend une alternance de phases B1 de fonctionnement en mode d'attente et de phases B2 de fonctionnement en mode de feu, au cours desquelles le système d'arme électrique 52 est effectivement utilisé. À cet effet, l'unité de gestion 60 commute à plusieurs reprises du mode d'attente vers le mode de feu et inversement.

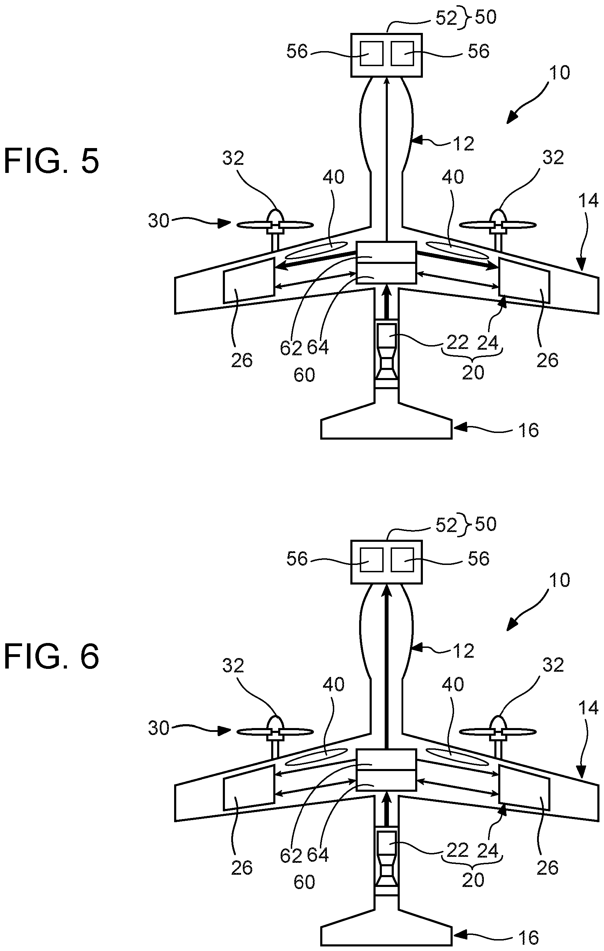

La figure 5 illustre la répartition de puissance au sein de l'aéronef 10 en mode de vol, tandis que la figure 6 illustre la répartition de puissance en mode d'attaque, les flèches correspondant aux échanges de puissance entre les composants de l'aéronef, l'épaisseur des flèches traduisant le niveau de puissance échangée.

## Revendications

1. Aéronef (10) de combat à voilure fixe, comprenant :
- une source d'énergie électrique (20),
- un système propulsif (30),
- un ensemble non-propulsif de faible puissance (40), comprenant un système de commande de vol,
- un ensemble non-propulsif de forte puissance (50), comprenant un système d'arme électrique (52), et
- une unité de gestion (60) configurée pour établir sélectivement sur commande plusieurs modes de fonctionnement comprenant :
- un mode de vol, dans lequel l'unité de gestion (60) distribue la puissance électrique fournie par la source d'énergie électrique (20) en fonction des besoins au système propulsif (30) et à l'ensemble non-propulsif de faible puissance (40), et
- un mode d'attaque, dans lequel l'unité de gestion (60) limite la puissance électrique fournie par la source d'énergie électrique (20) au système propulsif (30) et à l'ensemble non-propulsif de faible puissance (40), à la puissance requise pour permettre à l'aéronef de planer, et réserve pour l'ensemble non-propulsif de forte puissance (50) une majorité de l'énergie électrique disponible.

2. Aéronef selon la revendication 1, dans lequel la source d'énergie électrique (20) comprend un turbogénérateur (22) et une unité de stockage électrique (24).

3. Aéronef selon la revendication 2, dans lequel le mode d'attaque comprend un mode d'attente dans lequel le système d'arme électrique (52) est à l'arrêt, et un mode de feu dans lequel le système d'arme électrique (52) est en fonctionnement.

4. Aéronef selon la revendication 3, dans lequel l'unité de gestion (60) est configurée pour mettre le turbogénérateur (22) dans un régime de pseudo-ralenti et distribuer l'intégralité de la puissance électrique générée par le turbogénérateur à l'ensemble non-propulsif de faible puissance (40), dans le mode d'attente.

5. Aéronef selon la revendication 3 ou 4, dans lequel l'unité de gestion (60) est configurée pour mettre le turbogénérateur (22) dans un régime de pseudo-ralenti dans lequel une partie de la puissance électrique générée par le turbogénérateur est délivrée à l'ensemble non-propulsif de faible puissance (40) tandis que le reste de la puissance électrique générée par le turbogénérateur est utilisé pour recharger l'unité de stockage électrique (24), dans le mode d'attente.

6. Aéronef selon l'une quelconque des revendications 3 à 5, dans lequel l'unité de gestion (60) est configurée pour mettre le turbogénérateur (22) dans un régime de pleine puissance et distribuer au moins une majorité de la puissance électrique générée par le turbogénérateur au système d'arme électrique (52), dans le mode de feu.

7. Aéronef selon l'une quelconque des revendications 3 à 6, dans lequel l'unité de gestion (60) est configurée pour distribuer une puissance maximale délivrable par l'unité de stockage électrique (24) au système d'arme électrique (52), dans le mode de feu.

8. Aéronef selon l'une quelconque des revendications 1 à 7, dans lequel le système d'arme électrique (52) comprend au moins l'un parmi un système d'armement électronique (54) et une arme à énergie dirigée (56).

9. Procédé de mise en œuvre d'un aéronef (10) selon l'une quelconque des revendications 1 à 8, comprend successivement des étapes de :
- A) décollage, montée, et début de croisière, dans lesquelles l'unité de gestion (60) est maintenue en mode de vol, puis
- B) attaque, après commutation de l'unité de gestion (60) en mode d'attaque, puis
- C) fin de croisière et descente, après commutation de l'unité de gestion (60) en mode de vol.

10. Procédé selon la revendication 9, dans lequel l'étape B) comprend la commutation de l'unité de gestion (60) dans le mode d'attente, puis la commutation de l'unité de gestion (60) dans le mode de feu.

## Patentansprüche

1. Starrflügel-Kampfflugzeug (10), umfassend:
- eine elektrische Energiequelle (20),
- ein Antriebssystem (30),
- eine Nicht-Antriebs-Baugruppe niedriger Leistung (40), die ein Flugsteuerungssystem umfasst,
- eine Nicht-Antriebs-Baugruppe hoher Leistung (50), die ein elektrisches Waffensystem (52) umfasst, und
- eine Verwaltungseinheit (60), die so konfiguriert ist, dass sie selektiv auf Befehl mehrere Betriebsmodi herstellt, welche umfassen:
- einen Flugmodus, in dem die Verwaltungseinheit (60) die von der elektrischen Energiequelle (20) gelieferte elektrische Leistung in Abhängigkeit von den Bedarfen an das Antriebssystem (30) und an die Nicht-Antriebs-Baugruppe niedriger Leistung (40) verteilt, und
- einen Angriffsmodus, in dem die Verwaltungseinheit (60) die von der elektrischen Energiequelle (20) gelieferte elektrische Leistung für das Antriebssystem (30) und die Nicht-Antriebs-Baugruppe niedriger Leistung (40) auf die Leistung begrenzt, die erforderlich ist, um dem Flugzeug das Gleiten zu ermöglichen, und einen Großteil der verfügbaren elektrischen Energie für die Nicht-Antriebs-Baugruppe hoher Leistung (50) reserviert.

2. Flugzeug nach Anspruch 1, wobei die elektrische Energiequelle (20) einen Turbogenerator (22) und eine elektrische Speichereinheit (24) umfasst.

3. Flugzeug nach Anspruch 2, wobei der Angriffsmodus einen Bereitschaftsmodus umfasst, in dem das elektrische Waffensystem (52) angehalten ist, und einen Feuermodus, in dem das elektrische Waffensystem (52) in Betrieb ist.

4. Flugzeug nach Anspruch 3, wobei die Verwaltungseinheit (60) so konfiguriert ist, dass sie im Bereitschaftsmodus den Turbogenerator (22) in einen Pseudo-Leerlauf versetzt und die gesamte vom Turbogenerator erzeugte elektrische Leistung an die Nicht-Antriebs-Baugruppe niedriger Leistung (40) verteilt.

5. Flugzeug nach Anspruch 3 oder 4, wobei die Verwaltungseinheit (60) so konfiguriert ist, dass sie im Bereitschaftsmodus den Turbogenerator (22) in einen Pseudo-Leerlauf versetzt, in dem ein Teil der vom Turbogenerator erzeugten elektrischen Leistung an die Nicht-Antriebs-Baugruppe niedriger Leistung (40) abgegeben wird, während der Rest der vom Turbogenerator erzeugten elektrischen Leistung zum Aufladen der elektrischen Speichereinheit (24) verwendet wird.

6. Flugzeug nach einem der Ansprüche 3 bis 5, wobei die Verwaltungseinheit (60) so konfiguriert ist, dass sie im Feuermodus den Turbogenerator (22) in Vollleistung versetzt und mindestens einen Großteil der vom Turbogenerator erzeugten elektrischen Leistung an das elektrische Waffensystem (52) verteilt.

7. Flugzeug nach einem der Ansprüche 3 bis 6, wobei die Verwaltungseinheit (60) so konfiguriert ist, dass sie im Feuermodus eine maximale Leistung, die von der elektrischen Speichereinheit (24) abgegeben werden kann, an das elektrische Waffensystem (52) verteilt.

8. Flugzeug nach einem der Ansprüche 1 bis 7, wobei das elektrische Waffensystem (52) mindestens eines von einem elektronischen Waffensystem (54) und einer gerichteten Energiewaffe (56) umfasst.

9. Verfahren zum Betreiben eines Flugzeugs (10) nach einem der Ansprüche 1 bis 8, das nacheinander folgende Schritte umfasst:
- A) Abheben, Steigen und Beginn des Streckenflugs, in denen die Verwaltungseinheit (60) im Flugmodus gehalten wird, und anschließend
- B) Angriff, nach Umschalten der Verwaltungseinheit (60) in den Angriffsmodus, und anschließend
- C) Beenden des Streckenflugs und Sinken, nach Umschalten der Verwaltungseinheit (60) in den Flugmodus.

10. Verfahren nach Anspruch 9, wobei Schritt B) das Umschalten der Verwaltungseinheit (60) in den Bereitschaftsmodus und anschließend das Umschalten der Verwaltungseinheit (60) in den Feuermodus umfasst.

## Claims

1. A fixed-wing combat aircraft (10) comprising:
- an electrical power source (20),
- a propulsion system (30),
- a low-power non-propulsion assembly (40) comprising a flight control system,
- a high-power non-propulsion assembly (50) comprising an electrical weapon system (52), and
- a management unit (60) configured to selectively establish on command multiple operating modes comprising:
- a flight mode, in which the management unit (60) distributes the electrical power supplied by the electrical power source (20) depending on the needs to the propulsion system (30) and to the low-power non-propulsion assembly (40), and
- an attack mode, in which the management unit (60) limits the electrical power supplied by the electrical power source (20) to the propulsion system (30) and to the low-power non-propulsion assembly (40), to the power required to allow the aircraft to glide, and reserves a majority of the available electrical power for the high-power non-propulsion assembly (50).

2. The aircraft according to claim 1, wherein the electrical power source (20) comprises a turbogenerator (22) and an electrical storage unit (24).

3. The aircraft according to claim 2, wherein the attack mode comprises a standby mode in which the electrical weapon system (52) is off, and a fire mode in which the electrical weapon system (52) is in operation.

4. The aircraft according to claim 3, wherein the management unit (60) is configured to set the turbogenerator (22) in a pseudo-idle state and distribute all the electrical power generated by the turbogenerator to the low-power non-propulsion assembly (40), in the standby mode.

5. The aircraft according to claim 3 or 4, wherein the management unit (60) is configured to set the turbogenerator (22) in a pseudo-idle state in which a portion of the electrical power generated by the turbogenerator is delivered to the low-power non-propulsion assembly (40) while the rest of the electrical power generated by the turbogenerator is used to recharge the electrical storage unit (24), in the standby mode.

6. The aircraft according to any one of claims 3 to 5, wherein the management unit (60) is configured to set the turbogenerator (22) in a full power state and distribute at least a majority of the electrical power generated by the turbogenerator to the electrical weapon system (52), in the fire mode.

7. The aircraft according to any one of claims 3 to 6, wherein the management unit (60) is configured to distribute a maximum power deliverable by the electrical storage unit (24) to the electrical weapon system (52), in the fire mode.

8. The aircraft according to any one of claims 1 to 7, wherein the electrical weapon system (52) comprises at least one of an electronic weapon system (54) and a directed energy weapon (56).

9. A method for implementing an aircraft (10) according to any one of claims 1 to 8, successively comprises the steps of:
- A) take-off, climb, and start of cruise, in which the management unit (60) is maintained in flight mode, then
- B) attack, after switching the management unit (60) to the attack mode, then
- C) end of cruise and descent, after switching the management unit (60) to the flight mode.

10. The method according to claim 9, wherein step B) comprises switching the management unit (60) into the standby mode, then switching the management unit (60) into fire mode.
